# EUROPÄISCHE PATENTSCHRIFT

(11) **EP 0 571 687 B1**
(45) Veröffentlichungstag und Bekanntmachung des Hinweises auf die Patenterteilung: **16.08.1995**
(21) Anmeldenummer: 92810384.5
(22) Anmeldetag: 21.05.1992
(51) Int. Cl.: F16L 23/08

(54) **Vorrichtung zum Gegeneinanderpressen von zwei konischen Flanschen einer Rohrverbindung**
Device for pressing together tow conically shaped pipe flanges
Dispositif pour presser des brides coniques de tuyaux

(43) Veröffentlichungstag der Anmeldung: 01.12.1993
(73) Patentinhaber: Fend, Heinrich, CH-9470 Buchs (CH)
(72) Erfinder: Fend, Heinrich, CH-9470 Buchs (CH)
(74) Vertreter: Ryffel, Rolf

(56) Entgegenhaltungen:
- EP-A- 0 027 406
- DE-A- 3 048 903
- DE-A- 3 932 794
- GB-A- 663 646
- GB-A- 2 084 235

## Beschreibung

Die Erfindung bezieht sich auf eine Vorrichtung zum Gegeneinanderpressen von zwei konischen Flanschen einer Rohrverbindung, zwischen welchen Flanschen eine Dichtung angeordnet ist, mit einer Spannkette mit mehreren paarweise über jeweils ein gemeinsames Gelenk direkt miteinander verbundenen Laschen und mit Druckstücken, die je zwei Flanken zur Anlage an den konischen Flanschen aufweisen.

Solche Vorrichtungen, in welchen die konischen Flansche durch eine Spannkette umschlossen und durch Zusammenziehen dieser Kette mittels eines geeigneten, zum schnellen Oeffnen und Schliessen eingerichteten Verschlusses axial gegeneinandergepresst werden können, sind in verschiedenen Ausführungen bekannt. Die Vorrichtungen können eine dichte Verbindung gewährleisten, die je nach Auslegung auch für Metalldichtungen geeignet ist oder auch grosse Ueberdrücke aushalten kann.

Die Spannketten der bekannten Vorrichtungen weisen jedoch alle bedeutende Nachteile auf.

Beispielsweise gibt es Spannketten in Form von Rollenketten, in denen die konisch ausgeformten Flanken der Rollen über die Flansche greifen und die Rollen selbst auf den Gelenkbolzen einer durch Zwischenlaschen gebildeten Kette drehbar gelagert sind. Der Kontakt der Rollen mit den Flanschen kann jeweils nur an einer Stelle stattfinden und ist höchstens linienförmig, da jeweils zwei gegenläufige Radien zusammentreffen, ähnlich wie bei den Rollen eines Wälzlagers auf dem Innenring. Die Folge sind sehr hohe Flächenpressungen, die praktisch nur durch gehärtete Teile ohne Beschädigung aufgenommen werden können. Gerade dies ist aber in vielen Fällen unmöglich oder unerwünscht und teuer. Ausserdem haben solche Rollen den grundsätzlichen Nachteil, dass der Aussendurchmesser der Spannkette sehr gross wird, weil derselbe Radius, der nach innen für die Anlage der Rollenflanken an den Flanschen nötig ist, auch ausserhalb der Drehachse vorhanden ist, obwohl die Rollenflanken dort keine Funktion zu erfüllen haben. Dadurch werden lediglich das Volumen und die Masse einer solchen Anordnung vergrössert.

Ferner gibt es Spannketten, in denen die mit konischen Flanken versehenen Druckstücke je zwei Bohrungen aufweisen, in welchen durch zwei Bolzen über entsprechende Zwischenlaschen die Verbindung zu den benachbarten Druckstücken hergestellt wird. Hier wird die Flächenpressung bereits wesentlich reduziert, da die Flanken solcher Druckstücke gerade sein können (z.B. aus gezogenem Aluminium-Profil) oder sogar eine Krümmung in der gleichen Richtung wie die Flansche aufweisen können (was bei einer Rolle prinzipiell unmöglich ist). Auch kann hier der ausserhalb der Gelenkbolzen und Bohrungen liegende Teil der Druckstücke wegfallen, da er weder funktions- noch herstellungsmässig nötig ist. Trotzdem weisen auch solche Ketten immer noch wesentliche Nachteile auf. Pro Druckstück sind nämlich zwei Bolzen nötig, und die Druckstücke selbst sind einer hohen Zugbelastung ausgesetzt, was z.B. bei Druckstücken aus Kunststoff absolut unerwünscht ist. Wegen der Verwendung von zwei Bolzen ist ausserdem an den beiden Enden der Druckstücke viel Material nötig, obwohl die Anlage an den Flanschen nur in der Mitte stattfindet. Also werden solche Teile auch schwer und teuer, was insbesondere bei grösseren Nennweiten und Teilen aus Stahl beträchtliche Nachteile ergibt. Zudem ist die Kraftübertragung auf die Flansche nicht völlig stabil, da die Druckstücke in einem gewissen Bereich verschiedene Winkelstellungen einnehmen können. Es gibt auch konisch ausgedrehte Hohlschalen oder Segmente, die an einem grösseren Teil des Umfangs der Flansche angreifen und durch Schrauben gegeneinandergezogen werden. Diese Hohlschalen oder Segmente haben jedoch nur eine einzige theoretisch richtige Stellung zur Flanschachse, die aber beim Anziehen kaum erreicht wird, da nicht genau vorbestimmt ist, wie weit die Dichtung zwischen den Flanschen zusammengepresst wird. Dies gilt insbesondere für Metalldichtungen ohne festen Anschlag in axialer Richtung.

Die Erfindung stellt sich die Aufgabe, alle diese Nachteile zu vermeiden und eine Vorrichtung der eingangs angegebenen Art zur Verfügung zu stellen, welche leicht und billig ist und trotzdem alle verlangten Funktionen mit geringstem Materialaufwand und grösster Sicherheit erfüllt.

Die erfindungsgemässe Vorrichtung, mit der die Aufgabe gelöst wird, ist dadurch gekennzeichnet, dass jedes Druckstück in jeweils einem der Kettengelenke schwenkbar gelagert ist und an seinen beiden Flanken je zwei voneinander getrennte Auflagebereiche zur Anlage an den beiden Flanschen aufweist.

In der erfindungsgemässen Vorrichtung sind die Vorteile der Rollenkette mit denen der Druckstücke mit zwei Bolzen vereinigt und gleichzeitig deren Nachteile vermieden. Ausserdem können die Teile festigkeitsmässig optimal gestaltet werden (Material muss nur dort vorhanden sein, wo die eigentliche Funktion es erfordert). Gleichzeitig sind nur 50 % der bisher erforderlichen Gelenkbolzen nötig, wobei zusätzlich durch direkte Kraftweitergabe von Lasche zu Lasche die Zugbeanspruchung der Druckstücke wegfällt und eben dadurch auch ein "Sicherheitsgerüst" rund um die Druckstücke gelegt wird, was wiederum besonders bei Kunststoffteilen sehr vorteilhaft ist. Auch ist die Kraftübertragung auf die Flansche völlig stabil. Jedes der Druckstücke kann nur eine einzige, genau definierte Stellung einnehmen, da es in drei Punkten gehalten ist, nämlich im Kettengelenk und an den beiden Auflagebereichen der Flanken.

Durch die besondere Ausbildung der Druckstücke werden die Flansche einer gleichmässigeren Belastung ausgesetzt, was auch deren Auslegung vereinfacht. Es werden mit bescheidenem Aufwand verhältnismässig viele Druckpunkte am Flanschumfang erzeugt, was die Kraftverteilung besonders bei hochbeanspruchten Verbindungen äusserst gleichmässig macht.

Ausführungsbeispiele der Erfindung werden nachstehend anhand der Zeichnungen näher erläutert. In diesen zeigen:
Fig. 1 einen Axialschnitt durch ein Druckstück einer erfindungsgemässen Vorrichtung samt Flanschen und Dichtung einer Rohrverbindung,
Fig. 2 eine Stirnansicht einer solchen Vorrichtung in kleinerem Massstab,
Fig. 3 einen Querschnitt durch ein einzelnes Druckstück,
Fig. 4 eine Seitenansicht des Druckstücks von Fig. 3,
Fig. 5 in einem ähnlichen Schnitt wie Fig. 3 ein etwas anders ausgebildetes Druckstück und
Fig. 6 in einer ähnlichen Ansicht wie Fig. 1 eine weitere Variante.

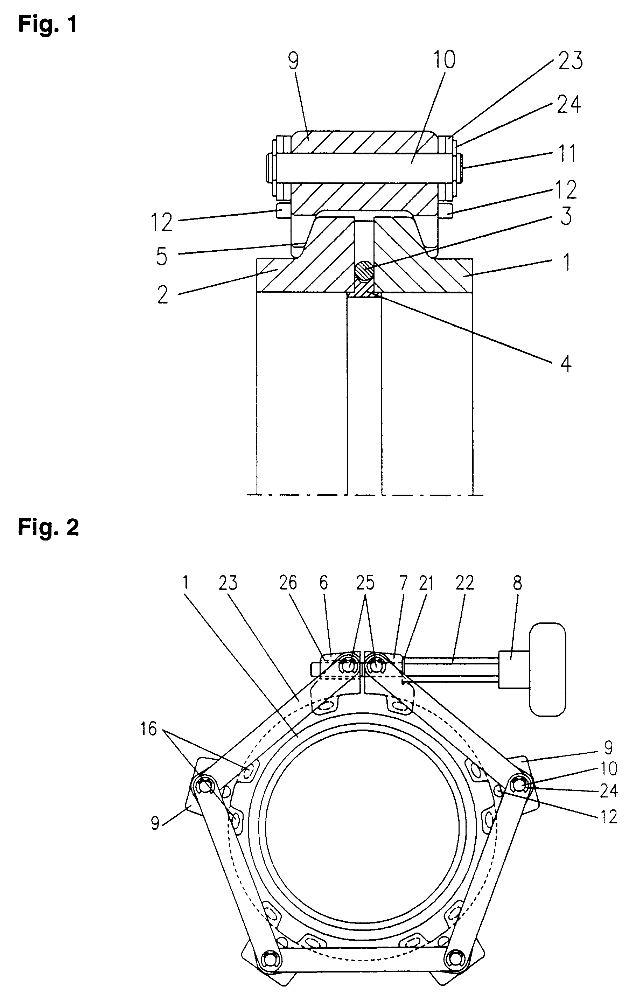

Die Fig. 1 zeigt zwei konische Flansche 1 und 2, zwischen denen eine Dichtung 3 angeordnet ist. Die Dichtung 3 sitzt auf einem Dichtring 4, der auch dazu dient, die Flansche 1 und 2 gegenseitig zu zentrieren. Auf den konischen Seitenflächen 5 der beiden Flansche 1 und 2 liegt ein Druckstück 9 auf, das in einem Kettengelenk 11 schwenkbar gelagert ist. Das Kettengelenk 11 ist im Ausführungsbeispiel von einem Bolzen 10 gebildet. Auf dem Bolzen 10 sind ferner Laschen 23 gelagert, die benachbarte Kettengelenke miteinander verbinden. Die Laschen 23 sind aussen am Druckstück 9 angeordnet und durch Sicherungsscheiben 24 gesichert. Das Druckstück 9 weist ferner an seinen Aussenseiten einen oder zwei zapfenförmige Fortsätze 12 auf, die sich in Richtung der Breite des Druckstücks 9 in den Bereich der Laschen 23 erstrecken und die in Zusammenwirkung mit den Laschen 23 die Schwenkbarkeit des Druckstücks 9 bezüglich der Laschen 23 begrenzen.

In Fig. 2 sind alle Teile einer erfindungsgemässen Vorrichtung in einer Stirnansicht dargestellt, und es ist ersichtlich, wie die Druckstücke 9 in einer von den Laschen 23 und Kettengelenkbolzen 10 gebildeten Spannkette angeordnet sind. Jede der beiden Flanken jedes Druckstücks 9 liegt am betreffenden Flansch jeweils in zwei voneinander getrennten Auflagebereichen 16 an, und die Krafteinleitung in das Druckstück erfolgt nur an einer Stelle, nämlich über den Gelenkbolzen 10. Das Druckstück 9 ist auf dem Bolzen 10 schwenkbar gelagert, es kann sich jedoch im ungespannten Zustand der Spannkette nur so weit verdrehen, als dies die zapfenförmigen Fortsätze 12 im Anschlag an die Laschen 23 gestatten. Die Spannkette wird durch eine Schraube 22 mit einem Griff 8 und zwei Endstücke 6 und 7 montiert und angezogen. Die Endstücke 6 und 7 sind mit einem freien Ende je einer Lasche 23 über einen Bolzen 25 schwenkbar verbunden. Die Schraube 22 ist im Endstück 7 geführt, während das Endstück 6 ein Innengewinde 26 besitzt, in das die Schraube 22 eingreift. Die Stirnfläche eines verdickten Abschnittes des Schaftes der Schraube 22 liegt über eine Unterlegscheibe 21 an einer Seitenfläche des Endstücks 7 an. So sind die beiden Endstücke 6 und 7 in einstellbarem Abstand voneinander gehalten. Jedes der beiden Endstücke 6 und 7 besitzt je zwei Flanken mit jeweils einem Auflagebereich zur Anlage an den beiden Flanschen.

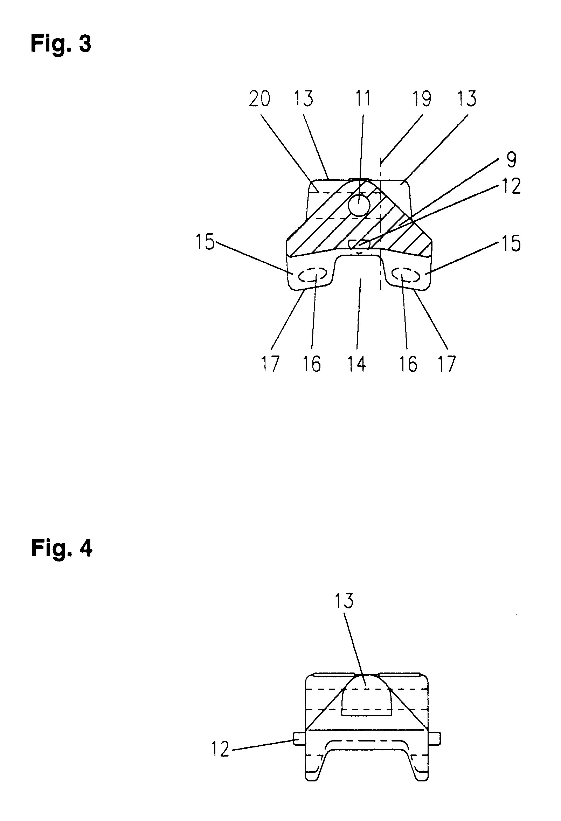

An jeder Flanke jedes Druckstücks 9 ist jeder Auflagebereich 16 so ausgebildet, dass er nicht genau auf die entsprechende Flanschform passt, sondern einen grosseren Krümmungsradius aufweist als die Flansche bei den Anlagestellen des Druckstücks. Wenn der Krümmungsradius des Auflagebereichs gleich gross wäre wie der Flanschradius an den vorgesehenen Anlagestellen, würde die Gefahr bestehen, dass der Auflagebereich am Anfang des Schliessvorgangs nur an den beiden Enden des Auflagebereichs mit je einer scharfen Kante auf den Flansch drückt und diesen so beschädigt. Im Extremfall kann der Krümmungsradius des Auflagebereichs bei weniger hoch beanspruchten Verbindungen auch unendlich sein, d.h. kann der Auflagebereich 16 eben sein. Bei höheren Beanspruchungen, oder wenn eine kleinere Flächenpressung erwünscht ist, ist jeder Auflagebereich konkav gebogen, jedoch wie erwähnt mit einem Krümmungsradius, der grösser ist als der Radius der Flansche bei den Anlagestellen des Druckstücks
In Fig. 3 sind weitere Details des Druckstücks 9 zu erkennen, insbesondere die beiden Auflagebereiche 16 an der Flanke des Druckstücks. Die hier ebenen Auflagebereiche 16 liegen auf Innenflächen 15 der Druckstückflanke, zwischen denen die Flanke eine Ausnehmung 14 aufweist. Auch die inneren Begrenzungen 17 der Innenflächen 15 verlaufen hier tangential zum Flansch. Das Druckstück 9 besitzt etwa in der Mitte seiner Breite augenförmige Verstärkungen 13, die sich in Umfangsrichtung der Spannkette erstrecken, siehe auch Fig. 4.

Mit einer Linie 19 in Fig. 3 ist angedeutet, wie das Endstück 6 oder 7 (Fig. 2) ausgebildet ist. Das Endstück entspricht einem Teil des Druckstücks 9, in Fig. 3 links von der Linie 19, mit einer zusätzlich angebrachten Bohrung 20 (Führungsbohrung im Endstück 7 bzw. Gewindebohrung im Endstück 6).

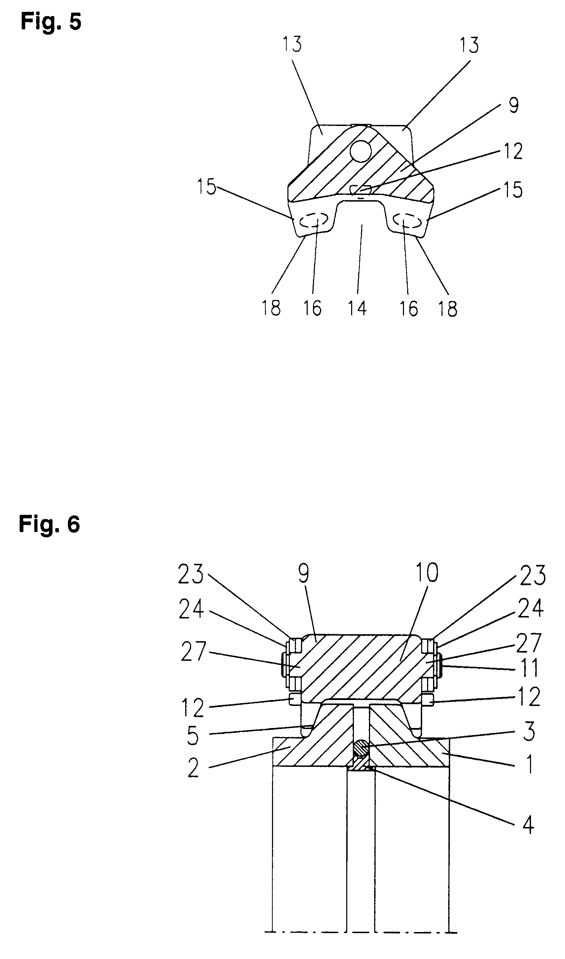

Bei dem in Fig. 5 gezeigten Druckstück sind die Auflagebereiche 16 gleich wie die Aussenseiten der Flansche gekrümmt, jedoch mit einem Krümmungsradius, der grösser ist als der Radius der Flansche bei den Auflagestellen des Druckstücks. Die Auflagebereiche 16 liegen auf Innenflächen 15 der Druckstückflanke, deren innere Begrenzungen 18 hier ebenfalls konkav gekrümmt sind (und nicht wie die Begrenzungen 17 in Fig. 3 tangential zum Flansch verlaufen). Dadurch kann die Flächenpressung an den Flanschen noch weiter herabgesetzt werden.

Die Fig. 6 zeigt in einer ähnlichen Ansicht wie Fig. 1 ein Druckstück 9 samt Flanschen 1 und 2 und Dichtungen 3 und 4. In dieser Variante sind die Gelenkbolzen 10 weggelassen. Stattdessen sind die Kettengelenke 11 von Zapfen 27 gebildet, die an den Stirnseiten des Druckstücks 9 von diesem abstehen und die mit dem Druckstück 9 einstückig ausgebildet sein können. Auf den Zapfen 27 sind die Laschen 23 der Spannkette schwenkbar gelagert.

## Patentansprüche

1. Vorrichtung zum Gegeneinanderpressen von zwei konischen Flanschen (1, 2) einer Rohrverbindung, zwischen welchen Flanschen eine Dichtung (3, 4) angeordnet ist, mit einer Spannkette mit mehreren paarweise über jeweils ein gemeinsames Gelenk (11) direkt miteinverbundenen Laschen (23) und mit Druckstücken (9), die je zwei Flanken zur Anlage an den konischen Flanschen (1, 2) aufweisen, dadurch gekennzeichnet, dass jedes Druckstück (9) in jeweils einem der Kettengelenke (11) schwenkbar gelagert ist und an seinen beiden Flanken je zwei voneinander getrennte Auflagebereiche (16) zur Anlage an den beiden Flanschen (1, 2) aufweist.

2. Vorrichtung nach Anspruch 1, dadurch gekennzeichnet, dass in jedem der Kettengelenke (11) je eines der Druckstücke (9) schwenkbar gelagert ist.

3. Vorrichtung nach Anspruch 1 oder 2, gekennzeichnet durch wenigstens zwei Endstücke (6, 7), die mit einem freien Ende je einer Lasche (23) verbunden sind, je zwei Flanken mit jeweils einem Auflagebereich (16) zur Anlage an den beiden Flanschen (1, 2) aufweisen und die in einstellbarem Abstand voneinander gehalten sind.

4. Vorrichtung nach Anspruch 3, dadurch gekennzeichnet, dass die Endstücke (6, 7) durch eine Schraube (22) in einstellbarem Abstand voneinander gehalten sind, welche Schraube (22) sich durch Bohrungen in den Endstücken erstreckt.

5. Vorrichtung nach einem der Ansprüche 1 bis 4, dadurch gekennzeichnet, dass jedes Druckstück (9) etwa in der Mitte seiner Breite augenförmige Verstärkungen (13) aufweist, die sich in Umfangsrichtung der Spannkette erstrecken.

6. Vorrichtung nach einem der Ansprüche 1 bis 5, dadurch gekennzeichnet, dass jedes Druckstück (9) je wenigstens einen in Richtung der Breite des Druckstückes vorstehenden Fortsatz (12) aufweist, der in Zusammenwirkung mit den Laschen (23) die Schwenkbarkeit des Druckstücks (9) bezüglich der Laschen (23) begrenzt.

7. Vorrichtung nach einem der Ansprüche 1 bis 6, dadurch gekennzeichnet, dass jedes Druckstück (9) in jeder seiner Flanken zwischen den beiden Auflagebereichen (16) jeweils eine Ausnehmung (14) aufweist.

8. Vorrichtung nach einem der Ansprüche 1 bis 7, dadurch gekennzeichnet, dass an jeder Flanke jedes Druckstücks (9) jeder der beiden Auflagebereiche (16) jeweils durch eine in gleicher Richtung wie der jeweilige Flansch gekrümmte Fläche gebildet ist, deren Krümmungsradius grösser ist als der Radius des Flansches bei den Auflagestellen des Druckstücks.

## Claims

1. Device for forcing two conical flanges (1, 2) of a pipe coupling together under pressure, a seal (3, 4) being arranged between these flanges, with a clamping chain having a plurality of straps (23) directly joined together in pairs by way of a common hinge (11) in each case, and with thrust pieces (9) each exhibiting two flanks for contacting the conical flanges (1, 2), characterized in that each thrust piece (9) is pivotably supported in respectively one of the chain hinges (11) and exhibits on its two flanks respectively two mutually separate supporting zones (16) for contact with the two flanges (1, 2).

2. Device according to claim 1, characterized in that respectively one of the thrust pieces (9) is pivotably supported in each of the chain hinges (11).

3. Device according to claim 1 or 2, characterized by at least two end pieces (6, 7) connected with a free end of respectively one strap (23), each of these end pieces exhibiting two flanks with respectively one supporting zone (16) for contacting the two flanges (1, 2) and being maintained at an adjustable distance from each other.

4. Device according to claim 3, characterized in that the end pieces (6, 7) are held at an adjustable distance from each other by a screw (22), this screw (22) extending through bores in the end pieces.

5. Device according to one of claims 1-4, characterized in that each thrust piece (9) exhibits, approximately in the center of its width, eye-shaped reinforcements (13) extending in the peripheral direction of the clamping chain.

6. Device according to one of claims 1-5, characterized in that each thrust piece (9) exhibits respectively at least one extension (12) projecting in the direction of the width of the thrust piece, this extension, in cooperation with the straps (23), limiting the pivotability of the thrust piece (9) with respect to the straps (23).

7. Device according to one of claims 1-6, characterized in that each thrust piece (9) exhibits in each of its flanks respectively one recess (14) between the two supporting zones (16).

8. Device according to one of claims 1-7, characterized in that, on each flank of each thrust piece (9), each of the two supporting zones (16) is in each case formed by a surface curved in the same direction as the respective flange, the radius of curvature of this surface being larger than the radius of the flange at the contact points of the thrust piece.

## Revendications

1. Dispositif pour presser l'une contre l'autre deux brides (1, 2) coniques d'un raccord à tubes, brides entre lesquelles est disposée une garniture d'étanchéité (3, 4), ce dispositif comprenant une chaîne de tension avec plusieurs maillons (23) reliés par paire directement entre eux par une articulation commune (11) et des pièces de pression (9) qui présentent, chacune, deux flancs venant s'appliquer contre les brides coniques (1, 2), caractérisé en ce que chaque pièce de pression (9) est logée pivotante dans chacune des articulations de chaîne (11) et présente, contre ses deux flancs, deux zones d'appui (16) séparées l'une de l'autre pour venir s'appliquer contre les deux brides (1, 2).

2. Dispositif selon la revendication 1, caractérisé en ce que dans chacune des articulations de chaîne (11), l'une des pièces de pression (9) est logée de manière pivotante.

3. Dispositif selon la revendication 1 ou 2, caractérisé par au moins deux pièces d'extrémité (6, 7) qui sont reliées à une extrémité libre d'un maillon (23), qui présentent deux flancs comprenant chacun une zone d'appui (16 venant s'appliquer contre les deux brides (1, 2) et qui sont maintenues à distance réglable l'une de l'autre.

4. Dispositif selon la revendication 3, caractérisé en ce que les pièces d'extrémité (6, 7) sont maintenues à distance réglable par une vis (22), vis (22) qui s'étend par des perçages dans les pièces d'extrémité.

5. Dispositif selon l'une des revendications 1 à 4, caractérisé en ce que chaque pièce de pression (9) présente, à peu près au milieu de sa largeur, des renforcements (13) en forme d'oeil qui s'étendent dans le sens périphérique de la chaîne de tension.

6. Dispositif selon l'une des revendications 1 à 5, caractérisé en ce que chaque pièce de pression (9) présente au moins un appendice (12) faisant saillie dans le sens de la largeur de la pièce de pression, appendice qui limite le pivotement de la pièce de pression (9) par rapport aux maillons (23) et, ce, en coopérant avec les maillons (23).

7. Dispositif selon l'une des revendications 1 à 6, caractérisé en ce que chaque pièce de pression (9) présente, dans chacun de ses flancs, un évidement (14) entre les deux zones d'appui (16).

8. Dispositif selon l'une des revendications 1 à 7, caractérisé en ce que contre chaque flanc de chaque pièce de pression (9), chacune des deux zones d'appui (16) est constituée par une surface courbée dans la même direction que la bride respective et dont le rayon de courbure est plus grand que le rayon de la bride aux points d'appui de la pièce de pression.
